# EUROPÄISCHE PATENTSCHRIFT

(11) **EP 0 735 637 B1**
(45) Veröffentlichungstag und Bekanntmachung des Hinweises auf die Patenterteilung: **11.12.2002**
(21) Anmeldenummer: 96810139.4
(22) Anmeldetag: 07.03.1996
(51) Int. Cl.: H02B 13/035

(54) **Schaltvorrichtung mit einem geerdeten, isoliergasgefüllten Metallgehäuse**
Switchgear having a grounded metal casing filled with insulating gas
Dispositif de coupure ayant un carter métallique mis à la terre et rempli d'un gaz isolant

(30) Priorität: 28.03.1995 DE 19511168
(43) Veröffentlichungstag der Anmeldung: 02.10.1996
(73) Patentinhaber: ABB Schweiz AG, 5400 Baden (CH)
(72) Erfinder: Füchsle, Dieter, 5426 Lengnau (CH); Högg, Peter, 5430 Wettingen (CH); Mantel, Lothar, 8112 Otelfingen (CH); Schett, Georg, 8405 Winterthur (CH)
(74) Vertreter: ABB Patent Attorneys

(56) Entgegenhaltungen:
- DE-A- 2 754 691
- DE-A- 2 929 054
- DE-A- 3 035 870
- DE-A- 3 421 265
- DE-A- 3 616 621
- DE-A- 4 121 653
- US-A- 3 857 006
- US-A- 4 527 220

## Beschreibung

### TECHNISCHES GEBIET

Bei der Erfindung wird ausgegangen von einer Schaltvorrichtung nach dem Oberbegriff von Patentanspruch 1. Diese Schaltvorrichtung weist ein geerdetes, isoliergasgefülltes Metallgehäuse auf, welches einen Leistungs-, einen Sammelschienentrenn- und einen Erdungsschalter aufnimmt. Durch die Wand des Metallgehäuses sind ein Stromanschluss zu einer Sammelschiene und ein Stromanschluss zu einem Verbraucherabgang, etwa zu einer Leitung oder zu einem Kabel, geführt. Eine solche Schaltvorrichtung weist geringere Abmessungen auf als eine entsprechend wirkende Freiluft-Schaltvorrichtung, da durch die Isoliergasfüllung des Metallgehäuses die Durchschlagsfestigkeit gegenüber Luft vergrössert wird.

### STAND DER TECHNIK

Die Erfindung nimmt auf einen Stand der Technik von Schaltvorrichtungen bezug wie er in der US 3 857 006 A angegeben ist. Eine in den Figuren 1 bis 3 beschriebene Schaltvorrichtung weist ein isoliergasgefülltes und überwiegend rohrförmig ausgebildetes Metallgehäuse auf, welches an seiner Mantelfläche zwei jeweils von einem rohrförmigen Flanschansatz begrenzte Öffnungen aufweist. Im Metallgehäuse sind ein Leistungsschalter sowie Erdungs- und Trennschalter, von denen einer als Sammelschienentrennschalter ausgeführt ist, angeordnet. Ein verbraucherseitiger Stromanschluss des Leistungsschalters ist mittels eines Schottungsisolators gasdicht durch eine beider Öffnungen aus dem Metallgehäuse in ein isoliergasgefülltes metallenes Ausgangsgehäuse geführt, welches auf dem die Öffnung begrenzenden Flanschansatz befestigt ist und einen Kabelanschluss enthält. Hingegen ist ein sammelschienenseitiger Stromanschluss des Leistungsschalters mittels eines weiteren Schottungsisolators gasdicht durch die andere der beiden Öffnungen aus dem Metallgehäuse in ein isoliergasgefülltes metallenes Eingangsgehäuse geführt, welches auf dem die Öffung begrenzenden Flanschansatz befestigt ist und eine Sammelschiene enthält. Der Leistungsschalter ist im Einschaltzustand auf der Achse des rohrförmig ausgebildeten Metallgehäuses angeordnet. Im Ausschaltzustand kann er radial von der Achse weggeführt werden. Der verbraucher- und der sammelschienenseitige Stromanschluss des Leistungsschalters werden dabei vom Kabelanschluss und von der Sammelschiene getrennt und zugleich geerdet. In einer alternativen Ausführungsform können diese Trenner- und Erderfunktionen auch durch eine Drehung des Leistungsschalters um die Rohrachse des Metallgehäuses ausgeführt werden.

Aus DE 30 35 870 A1 ist ein Drehtrennschalter mit einem isoliergasgefüllten Metallgehäuse und mit einer Kontaktanordnung entnehmbar, welcher einen als drehbares Messer ausgebildeten beweglichen Kontakt sowie drei feststehende Kontakte aufweist, von denen zwei jeweils mit einem von zwei Leistungsschaltern verbunden sind und der dritte mit einer Sammelschiene elektrisch kontaktiert ist. Durch Drehung des Messers können beliebige Schaltverbindungen zwischen den Schaltern und der Sammelschiene erreicht werden.

Eine in DE-PS 951 019 beschriebene Schaltvorrichtung weist ein mit einem Isoliergas mit einer höheren Durchschlagsfestigkeit als Luft gefülltes Gehäuse auf, in dem Schalter, wie Leistungsschalter, Ausgangstrennschalter, Messwandler und Durchführungen enthalten sind. Femer sind auch alle Vorrichtungen zur Betätigung der Schalter und alle Sicherungen und Überwachungseinrichtungen in dem Gehäuse untergebracht, so dass die Schaltvorrichtung eine betriebsfertige Schalteinheit darstellt, welche am Verwendungsort nur an die Sammelschienen und an die Steuerleitungen angeschlossen zu werden braucht. Die Sammelschienen und die zugehörigen Sammelschienentrenner sind in einem weiteren isoliergasgefüllten Gehäuse angeordnet. Zum Anschliessen der Schaltvorrichtung wird deshalb ein ebenfalls isoliergasgefüllter Verbindungskanal benötigt, welcher zwischen die Schaltvorrichtung und das Sammelschienengehäuse eingebaut wird.

Aus DE 27 54 691 C1 ist eine Schaltvorrichtung bekannt, die Teil einer metallgekapsetten, druckgasisolierten Hochspannungsschaltanlage ist und einen mit SF₆ von mehreren bar Druck gefüllten Druckbehälter aufweist, in dem ausser Leistungsschalter auch Stromwandler und Arbeitserder angeordnet sind und in dem durch feldspezifische stromführende Teile unterschiedliche Verknüpfungen dieser Geräte untereinander herstellbar sind. Der Druckbehälter ist mit zwei weiteren SF₆gefüllten Druckbehältern formschlüssig verbunden, von denen der eine alle anschlussseitig erforderlichen Geräte und stromführenden Teile, wie Trennschalter, Kabel- oder Freileitungs-Anschlusselemente und Erder, enthält und der andere alle zur Sammelschiene gehörenden Schaltgeräte und stromführenden Teile. Durch eine solche Schalteinrichtung wird in einer gasisolierten Hochspannungsschaltanlage, in der das Sammelschienenteil und das Abgangsteil jeweils in separaten Druckgasbehältern untergebracht sind, mit einer geringstmöglichen Anzahl von Druckbehältem eine hohe betriebstechnische Verfügbarkeit erreicht.

In DE 34 21 265 A1 ist ein Schaltgerät für Energieverteiler in Verbundnetzen angegeben mit einem isoliergasgefüllten Gehäuse. Das Gehäuse umfasst zwei im Leiterzug einer Ringsammelschiene angeordnete Lastschalter, Erdungsschalter sowie einen Speiseschalter. Der Speiseschalter ist mit einem seiner beiden Stromanschlüsse mit einem Verbraucher und mit dem anderen seiner beiden Stromanschlüsse über einen Sammelschienentrennschalter mit einem von beiden Lastschaltern begrenzten und im Gehäuseinneren befindlichen Abschnitt der Ringsammelschiene verbunden. Ein derartiges Schaltgerät benötigt verhältnismässig viel Platz, da es neben dem Leistungsschalter, dem Sammelschienentrennschalter und Erdungsschaltern auch einen Abschnitt der Sammelschiene aufnimmt.

Ein in DE 33 18 344 A1 beschriebener Hochspannungsleistungsschalter weist eine in einem geerdeten, isoliergasgefüllten Metallgehäuse angeordnete Schalteinheit auf, deren beide Stromanschlüsse durch die Wand des Metallgehäuses an Freileitungen geführt sind. Im Zuge der Stromanschlüsse sind zwei Trennstellen angeordnet, welche nach Ablassen des Isoliergases und Öffnen des Metallgehäuses vom Montagepersonal betätigt werden können und dem Trennen und Verbinden der Stromanschlüsse bei der Demontage und der Montage der Schalteinheit dienen. Bei der Herstellung einer Schaltanlage werden dieser Schalter und alle weiteren Elemente der Schaltanlage komponentenweise montiert.

### KURZE DARSTELLUNG DER ERFINDUNG

Der Erfindung, wie sie im Patentanspruch 1 angegeben ist, liegt die Aufgabe zugrunde, eine Schaltvorrichtung der eingangs genannten Art anzugeben, die sich durch eine kompaktere Bauweise und höhere Verfügbarkeit auszeichnet als eine vergleichbar wirkende Freiluftschaltvorrichtung und mit der zugleich eine Vielzahl von Schaltungskonfigurationen zwischen einer oder mehreren an Freiluft befindlichen Sammelschienen und einem Verbraucherabgang, etwa einem Kabel oder einer Freileitung, gebildet werden können.

Die Schaltvorrichtung nach der Erfindung zeichnet sich dadurch aus, dass der überwiegende Teil aller in einer Hochspannungsschaltanlage benötigten Schaltgeräte, wie Leistungsschalter, Sammelschienentrenner und Erder, in einem einzigen schottwandfreien Gasraum eines überwiegend rohrförmigen Metallgehäuses untergebracht sind. Eine solche Schaltvorrichtung kann als ganzes in sich geschlossenes Modul in der Fabrik vorgefertigt und geprüft werden. Vor Ort kann dann eine Hochspannungsschaltanlage durch Anschliessen eines über Freiluftdurchführung aus der Schaltvorrichtung geführten Stromanschlusses an die Sammelschiene(n) und eines weiteren aus der Schaltvorrichtung herausgeführten Stromanschlusses an ein Kabel oder eine Freileitung in äusserst rascher und einfacher Weise fertiggestellt werden. Von besonderem Vorteil ist es hierbei, dass die Schaltgeräte der Hochspannungsanlage nun nicht mehr dem direkten Einfluss des Wetters ausgesetzt sind und daher auch nach langen schaltfreien Zeiträumen eine hohe Verfügbarkeit aufweisen. Zugleich werden für alle wesentlichen Bestandteile der Anlage nun nicht mehr mehrere, den einzelnen Bestandteilen zugeordnete, Fundamente benötigt, sondern es reicht ein einziges, die Schaltvorrichtung tragendes, Fundament im allgemeinen aus.

Da die Schaltvorrichtung wegen des im Inneren ihres Metallgehäuses vorgesehenen Isoliergases geringe Isolationsabstände aufweist, ist sie klein und raumsparend ausgebildet und kann problemlos als Ersatz für mehrere in einem oder mehreren Abzweigen einer oder mehrerer Sammelschienen vorgesehene Schaltgeräte in irgendeine bereits existierende Freiluftschaltanlage eingebaut werden. Wegen der geringen räumlichen Abmessungen kann die Schaltvorrichtung nach der Erfindung problemlos in alle gängigen Schaltanlagen-Layouts eingebaut werden.

Die Schaltvorrichtung nach der Erfindung eignet sich in besonders vorteilhafter Weise beim Retrofit bereits bestehender Freiluftschaltanlagen mit geringen Abmessungen. Durch den Einbau der Schaltvorrichtung nach der Erfindung können solche Anlagen besonders einfach und kostengünstig auf ein höheres Spannungsniveau ausgebaut werden.

Bei Bedarf können ohne weiteres zusätzliche Schaltgeräte, wie Abgangstrenner oder weitere Erder, und/oder Sensoren, wie insbesondere kapazitiv oder optisch wirkende Spannungssensoren und als Rogowski-Spule ausgebildete oder optisch wirkende Stromsensoren und/oder ein beide Sensoren kombinierender Stromund Spannungssensor, in der Schaltvorrichtung vorgesehen sein. Da solche Sensoren im Gegensatz zu konventionellen Strom- und/oder Spannungswandlern äusserst platzsparend ausgebildet sind, kann die Schaltanlage nach der Erfindung ohne weiteres mit zusätzlichen Strom- und/oder Spannungssensoren nachgerüstet werden, welche dann beispielsweise die für synchronisierte und kontrollierte Einschaltvorgänge benötigte Spannungsmessung auf beiden Seiten des Schalters ermöglichen.

Das Metallgehäuse weist zweckmässigerweise für jede Spannungsklasse ein Gehäuse definierter Abmessungen aus. Hierbei empfiehlt es sich, die Abmessungen so zu wählen, dass das Metallgehäuse neben Leistungsschalter, Sammelschienentrenner und Erder auch Abgangstrenner und Sensoren aufnehmen kann. Das Metallgehäuse kann dann je nach Bedarf alle diese Komponenten oder aber nur einen Teil dieser Komponenten enthalten. Dient die Schaltvorrichtung nach der Erfindung beispielsweise der Nachrüstung einer Freiluftschaltanlage, in der noch funktionsfähige Stromund/oder Spannungswandler und Abgangstrenner vorhanden sind, so reicht es aus, wenn das Metallgehäuse Leistungsschalter, Sammelschienentrenner und Erder umfasst, und wenn beim Einbau in die Hochspannungsschaltanlage die noch vorhandenen Strom- und Spannungswandler an den Durchführungen angebracht und der noch vorhandene Abgangstrenner mit dem Abgang des Schaltvorrichtung verbunden wird.

Bei entsprechender Ausbildung kann die Schaltvorrichtung sowohl in Anlagen mit Einfachsammelschiene als auch in Anlagen mit Doppelsammelschiene eingebaut werden. Eine besonders raumsparende Anordnung wird dann erreicht, wenn bei Einsatz der Schaltvorrichtung nach der Erfindung in einer Schaltanlage mit einer Doppelsammelschiene der Sammelschienentrenner als Mehrfach-Stellungstrenner ausgebildet ist und unterbrechungsfrei von der einen Sammelschiene auf die andere Sammelschiene schalten kann. Anstelle von zwei Freiluftdurchführungen, wie sie bei erfindungsgemässen Schaltvorrichtungem für Anlagen mit Doppelsammelschiene vorgesehen sind, kann bei Schaltvorrichtungen für Anlagen mit Einfachsammelschiene eine der beiden Freiluftdurchführungen entfernt und der am Metallgehäuse vorhandene und der Halterung der Freiluftdurchführung dienende Flanschansatz durch einen geerdeten Metalldeckel verschlossen werden, auf dessen ins Gehäuseinnere gerichteten Seite ein als Erdungskontakt wirkender, feststehender Kontakt des Sammelschienentrenners befestigt ist.

Bei entsprechender Gestaltung kann die Schaltvorrichtung nach der Erfindung sowohl einphasig als auch mehrphasig gekapselt ausgebildet sein.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine Seitenansicht einer ersten Ausführungsform der Schaltvorrichtung nach der Erfindung mit einem im wesentlichen rohrförmigen Gehäuse,
- Fig.2: eine Ansicht der Schaltvorrichtung nach Fig.1 von rechts in Richtung der Rohrachse,
- Fig.3: ein Prinzipschaltbild der Schaltvorrichtung nach Fig.1,
- Fig.4: ein Prinzipschaltbild einer zweiten Ausführungsform der Schaltvorrichtung nach der Erfindung,
- Fig.5: eine Aufsicht auf einen längs der Rohrachse geführten Schnitt durch einen Abschnitt der Schaltvorrichtung nach Fig.1,
- Fig.6: eine Aufsicht auf einen längs VI-VI geführten Schnitt durch die Schaltvorrichtung nach Fig.5,
- Fig.7: eine Aufsicht auf einen längs der Rohrachse geführten Schnitt durch einen Abschnitt einer abgewandelten Ausführungsform der Schaltvorrichtung nach Fig.1, und
- Fig.8: eine Aufsicht auf einen längs VIII-VIII geführten Schnitt durch die Schaltvorrichtung nach Fig.7.

### WEGE ZUR AUSFÜHRUNG DER ERFINDUNG

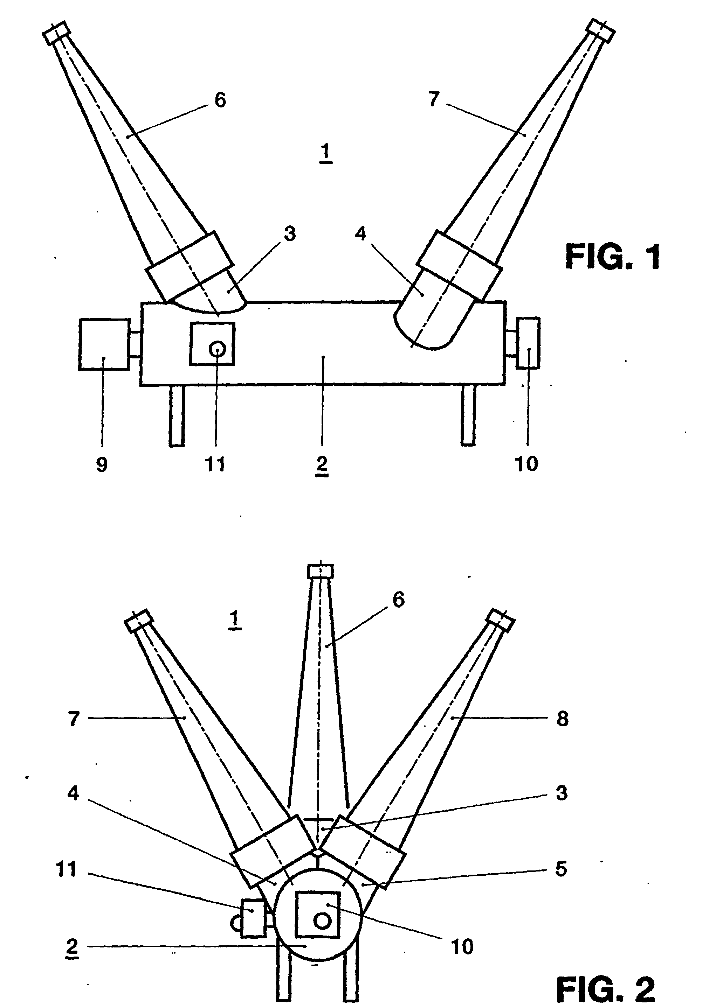

In allen Figuren bezeichnen gleiche Bezugszeichen gleichwirkende Teile. Die in den Figuren 1 und 2 dargestellte und mit dem Bezugszeichen 1 gekennzeichnete Schaltvorrichtung weist ein mit Isoliergas, wie etwa SF₆ von einigen bar Druck, gefülltes, im wesentlichen rohrförmig ausgebildetes Metallgehäuse 2 auf. Das Metallgehäuse 2 ist auf einem nicht bezeichneten Gestell gelagert und befindet sich auf Erdpotential. Das Metallgehäuse weist an seiner Mantelfäche drei nicht ersichtliche Öffnungen auf, welche jeweils von einem von drei rohrförmige Flanschansätzen 3, 4 und 5 begrenzt sind. An den vom Metallgehäuse 2 abgewandten Enden der Flanschansätze ist jeweils eine von drei Freiluftdurchführungen 6, 7 und 8 gehalten. Diese Freiluftdurchführungen weisen bevorzugt jeweils ein faserverstärktes Kunststoffgehäuse mit einer Silikonbeschirmung auf. Hierdurch wird die Schaltvorrichtung gegenüber einer mit Porzellanisolatoren ausgerüsteten Vorrichtung nicht nur erheblich leichter und daher besser transportfähig, sondern ist zugleich auch das Risiko einer Explosion der Durchführungen, etwa infolge von Montage- oder Wartungsarbeiten in der Anlage oder beim Einwirken von Umbruchkräften, praktisch gebannt. Die Achsen der Flanschansätze 3, 4 und 5 stehen typischerweise in einem Winkel von ca. 50° auf der Rohrachse des Metallgehäuses 2. Die Flanschansätze 4 und 5 sind gegeneinander um einen Winkel von typischerweise 80 bis 100° geneigt. Durch die gewinkelte Anordnung der Flanschansätze kann die erforderliche dielektrische Festigkeit an Luft mit einer möglichst kleinen Gehäuseabmessung realisiert werden.

Das Metallgehäuse 2 weist an seinen beiden Stirnseiten zwei weitere, ebenfalls nicht ersichtliche Öffnungen auf. Durch die eine Öffnung ist ein Antrieb 9 für einen im Inneren des Metallgehäuses befindlichen Leistungsschalter und durch die andere öffnung ein Antrieb 10 für einen ebenfalls im Gehäuseinneren befindlichen Sammelschienentrenner jeweils in gasdichter Weise geführt. Auf seiner Mantelfläche weist das Metallgehäuses 2 eine weitere nicht ersichtliche Öffnung auf, durch die in gasdichter Weise ein Antrieb 11 für einen im Metallgehäuse 2 befindlichen Erder geführt ist.

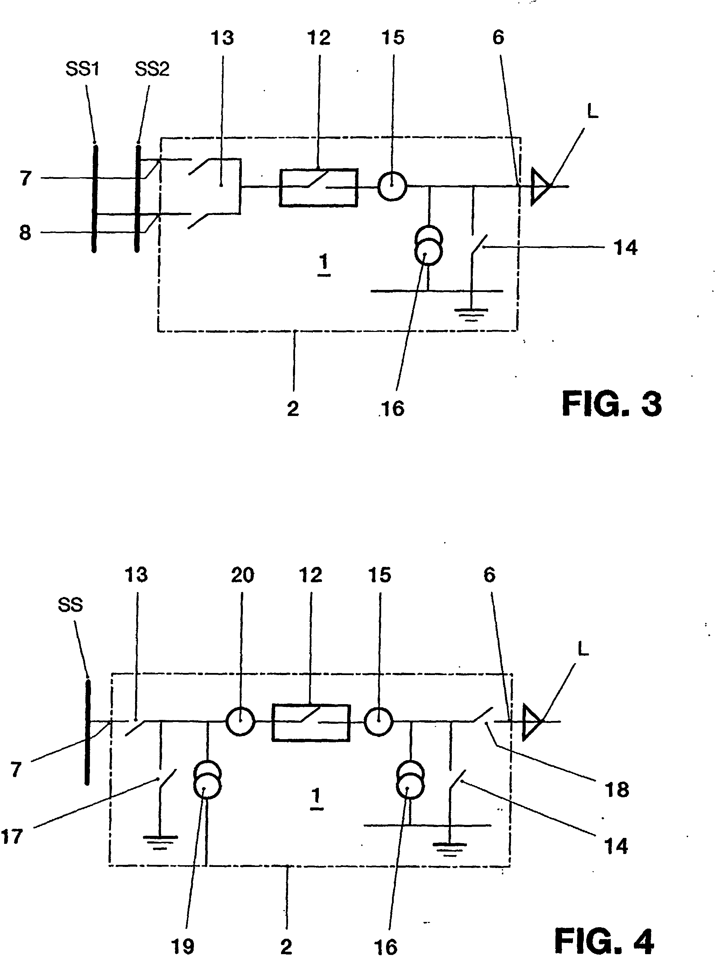

Aus Fig.3 ist zu erkennen, dass das Metallgehäuse 2 der Schaltvorrichtung einen Leistungsschalter 12 aufnimmt, dessen einer Stromanschluss über einen als Mehrfach-Stellungstrenner ausgeführten Sammelschienentrenner 13 und eine der beiden Freiluftdurchführungen 7 oder 8 mit einer Sammelschiene SS1 oder SS2 einer Hochspannungsschaltanlage und dessen anderer Stromanschluss über die Freiluftdurchführung 6 mit einem Verbraucherabgang, etwa einem Kabel oder einer Leitung L der Hochspannungsschaltanlage, verbunden ist. Das Metallgehäuse 2 nimmt ferner einen zwischen dem abgangsseitigen Stromanschluss des Leistungsschalters 12 und dem geerdeten Metallgehäuse 2 geschalteten Erder 14 auf sowie Sensoren, wie einen Stromsensor 15 und einen Spannungssensor 16, welche am verbraucherseitigen Stromanschluss des Leistungsschalters 12 den Strom und die Spannung detektieren. Die Sensoren 15, 16 sind platzsparend ausgebildet. Der Stromsensor 15 kann als Rogowskispule oder optischer Sensor, der Spannungssensor 16 als kapazitiver Spannungsteiler oder optischer Sensor ausgeführt sein. Alternativ können die beiden Sensoren in einem einzigen Sensor kombiniert sein.

Wie in Fig.4 dargestellt ist, kann alternativ die Freiluftdurchführung 8 entfallen und der Leistungsschalter 12 über einen als 2-Stellungstrenner ausgeführten Sammelschienentrenner 13 und die Freiluftdurchführung 7 mit lediglich einer Sammelschiene SS der Hochspannungsschaltanlage verbunden sein. Zusätzlich können auch ein zwischen den sammelschienenseitigen Stromanschluss des Leistungsschalters 12 und das geerdete Metallgehäuse 2 geschalteter Erder 17 und/oder ein zwischen den abgangsseitigen Stromanschluss des Leistungsschalters und den Stromleiter der Freiluftdurchführung 6 geschalteter Abgangstrenner 18 und/oder ein weiterer Spannungssensor 19 und ein weiterer Stromsensor 20 vorgesehen sein. Die Sensoren 19, 20 detektieren am sammelschienenseitigen Stromanschluss des Leistungsschalters 12 Strom und Spannung. Zusammen mit den Sensoren 15, 16 können so Differenzströme und/oder -spannungen über dem Leistungsschalter 12 ermittelt werden, wodurch ein gegebenenfalls erwünschtes synchrones Schalten des Leistungsschalters ermöglicht wird.

Durch das Unterbringen von Spannungs- und Stromsensoren und weiterer Sensoren, etwa zur Messung von Druck, Dichte oder Temperatur oder von Teilentladungen, in einem einzigen Gehäuse werden Gehäusedurchführungen eingespart und können zugleich die zur Übertragung der von den Sensoren ermittelten Informationen benötigten Wege kurz gehalten werden. Darüber hinaus sind durch die kompakte Bauweise auch sämtliche zur Steuerung und Regelung der Schaltgeräte der Schaltvorrichtung 1 benötigten Verbindungen für den Austausch von Information zwischen den Sensoren und den Schaltgeräten kurz und zentral an einem Ort untergebracht. Zur Erfüllung ihrer leittechnische Funktionsfähigkeit ist es daher nurmehr notwendig, die Schaltvorrichtung 1 in einfacher Weise über einen einzigen Bus mit einem leittechnische Aufgaben erfüllenden Steuerschrank zu verbinden.

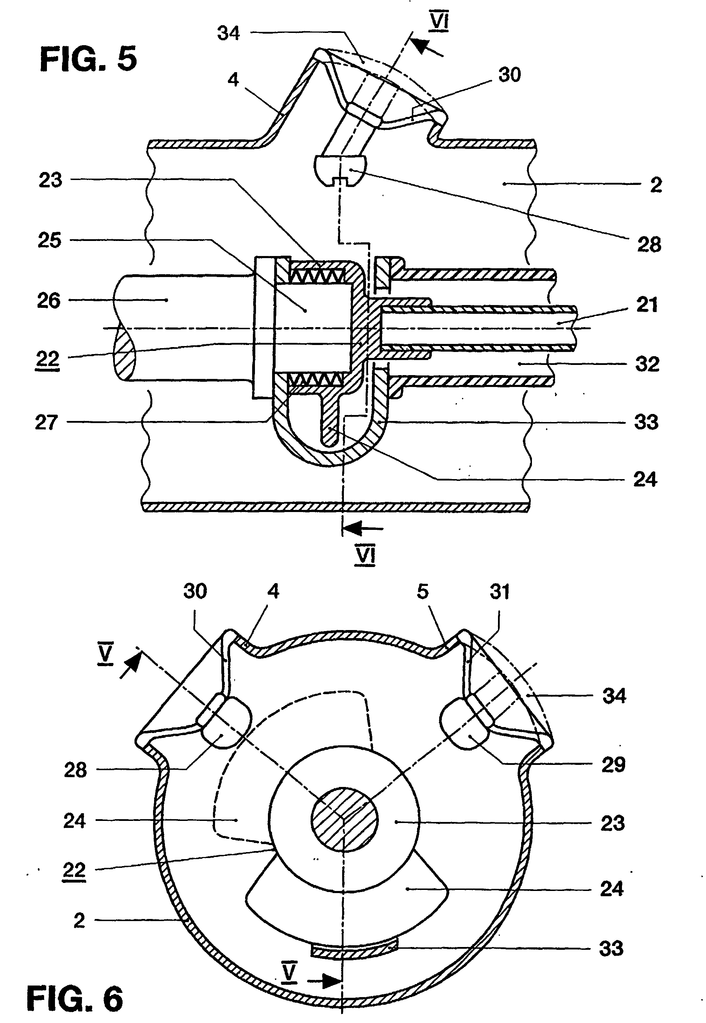

Ein konstruktiv ausgeführter Teil der Schaltvorrichtung nach Fig.1 ist in den Figuren 5 und 6 angegeben. In diesen Figuren sind Schnitte durch das Metallgehäuse 2 der Schaltvorrichtung 1 im Bereich der beiden Flanschansätze 4 und 5 nach Entfernen der beiden Freiluftdurchführungen 7 und 8 dargestellt. Der in Fig.5 dargestellte Schnitt ist längs der Achse des rohrförmigen Metallgehäuse 2 ausgeführt, wohingegen der in Fig.6 dargestellte Schnitt im wesentlichen quer zur Achse ausgeführt ist.

In den beiden Figuren 5 und 6 bezeichnet 21 eine gasdicht aus dem Metallgehäuse 2 geführte, aus Isoliermaterial bestehende Welle des aus den Figuren 1 und 2 ersichtlichen Antriebs 10 des Sammelschienentrenners 13. An dem ins Metallgehäuse 2 geführten Ende der Welle 21 ist eine bewegliche Kontaktanordnung 22 des Sammelschienentrenners 13 befestigt. Die bewegliche Kontaktanordnung 22 ist aus einer Lagerbuchse 23 und einem an der Lagerbuchse angesetzten und sich radial nach aussen erstreckenden, kreissektorförmigen Abschnitt 24 Kontaktmaterial aufgebaut. Die Lagerbuchse 23 ist drehbar auf einem zylinderförmig ausgebildeten Endabschnitt 25 eines sammelschienenseitig angeordneten, feststehenden Stromanschlusses 26 des Leistungsschalters 12 abgestützt. Zwischen der Mantelfläche des Endabschnitts 25 und der Innenfläche der Lagerbuchse 23 ist ein der Stromübertragung vom Sammelschienentrenner 13 auf den Leistungsschalter 12 dienender Gleitkontakt 27 angeordnet. Die Bezugszeichen 28 und 29 bezeichnen feststehende Kontakte des Sammelschienentrenners 13, welche von Stützisolatoren 30 und 31 im Bereich der Flanschansätze 4 und 5 gehalten sind. Bei der Montage der Freiluftdurchführungen 7 und 8 werden diese Kontakte mit dem Stromleiter der Freiluftdurchführungen verbunden und dienen dann dem Stromanschluss der Schaltvorrichtung 1 an die Sammelschienen SS1 und SS2. Die Stützisolatoren 30 und 31 können als Schottungsisolatoren ausgebildet sein, die das Innere des Metallgehäuses 2 gasdicht nach aussen hin abschliessen. Sie sind jedoch vorzugsweise als gasdurchlässige Stützisolatoren ausgebildet. Isoliergas aus dem Inneren des Metallgehäuses bildet dann mit dem Inneren der gasdicht ausgeführten Freiluftdurchführungen 7 und 8 ein auf gleichem Druckniveau befindliches Gesamtvolumen.

Ein auf der Stirnseite des Metallgehäuses 2 befestigter Stützisolator 32 umgibt die Welle 21 konzentrisch und trägt an seinem vom Metallgehäuse 2 abgewandten Ende ein die bewegliche Kontaktanordnung 22 hintergreifendes bügelförmiges Halteteil 33, auf dem der sammelschienenseitige Stromanschluss 26 des Leistungsschalters 12 abgestützt ist. Alternativ kann der Stromanschluss 26 des Leistungsschalters 12 auch auf einem auf der inneren Mantelfläche des Metallgehäuses 2 gelagerten Isolator abgestützt sein. Die Welle 21 kann dann über eine an der Mantelfläche des Metallgehäuses 2 vorgesehenen Öffnung ins Gehäuseinnere geführt sein.

Die bewegliche Kontaktanordnung des Sammelschienentrenners 13 kann vier bevorzugte Stellungen einnehmen:

In einer ersten Stellung (in Fig.6 gestrichelt dargestellt) kontaktiert der Abschnitt 24 den feststehenden Kontakt 28 und hat so die Sammelschiene SS1 mit dem sammelschienenseitigen Stromanschluss des Leistungsschalter 12 verbunden. Bei geschlossenem Leistungsschalter 12 speist nun die Sammelschiene SS1 in den Verbraucherabgang L ein.

Bei geöffnetem Leistungsschalter 12 kann durch Drehen der Welle 21 im Uhrzeigersinn eine zweite Stellung (in Fig.6 nicht dargestellt) erzielt werden. Der als ausreichend grosser Kreissektor geformte Abschnitt 24 kann den feststehenden Kontakt 29 zusätzlich kontaktieren, ohne dass die galvanische Verbindung zwischen der Sammelschiene SS1 und der beweglichen Kontaktanordnung 22 unterbrochen wird. Es sind dann die beiden Sammelschiene SS1 und SS2 über den Sammelschienentrenner 13 miteinander verbunden.

Durch Weiterdrehen der Welle 21 im Uhrzeigersinn kann bei geöffnetem Leistungsschalter 12 eine dritte Stellung erreicht werden (in Fig.6 ebenfalls nicht dargestellt). Beim Übergang von der zweiten in die dritte Stellung trennen sich der feststehende Kontakt 28 und die bewegliche Kontaktanordnung 22 voneinander und sind nun nur noch der feststehende Kontakt 29 und damit die Sammelschiene SS2 mit dem sammelschienenseitigen Stromanschluss 26 des Leistungsschalters 12 verbunden. Bei geschlossenem Leistungsschalter 12 ist nun die Sammelschiene SS2 mit dem Verbraucherabgang L verbunden.

Durch Weiterdrehen der Welle 21 bei geöffnetem Leistungsschalter 12 im Uhrzeigersinn wird die in Fig.6 durchgezogen dargestellte vierte Stellung erreicht, in der nun auch die beiden Kontakte 29 und 22 voneinander getrennt sind. Der kreissektorförmige Abschnitt 24 der bewegliche Kontaktanordnung 22 ist nun in das bügelförmige Halteteil 33 eingefahren und kontaktiert dann weder den feststehenden Kontakt 28 noch den feststehenden Kontakt 29. In dieser Stellung können möglicherweise im Leistungsschalter 12 bzw. in Steuerkondensatoren des Leistungsschalters 12 vorhandene elektrische Ladungen durch Erdung entfernt werden (z.B. durch einen entsprechend dem Erder 17 gemäss Fig.4 angeordneten Erder).

Anstelle der Freiluftdurchführung 8 kann der Flanschansatz 5 einen in Fig.6 gestrichelt dargestellten Metalldeckel 34 tragen, auf dessen ins Gehäuseinnere gerichteten Seite der nun als Erdungskontakt wirkende, feststehende Kontakt 29 des Sammelschienentrenners 13 befestigt ist. Der Sammelschienentrenner 13 erdet dann in der zweiten Stellung die Sammelschiene SS1 und gleichzeitig den sammelschienenseitigen Stromanschluss 26 des Leistungsschalters 12. In der dritten Stellung erdet er nur noch den Stromanschluss 26 des Leistungsschalters.

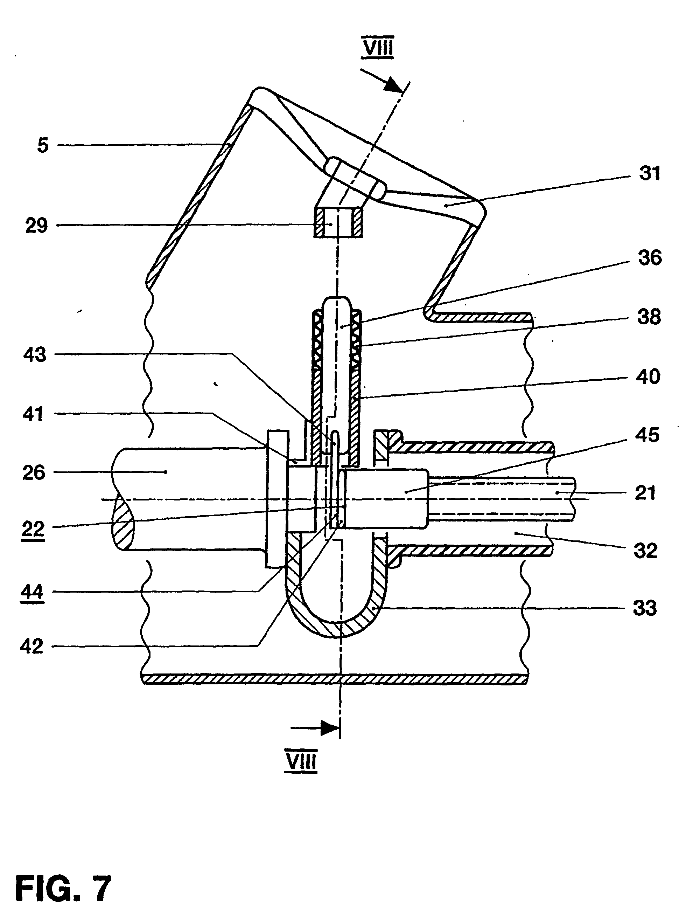

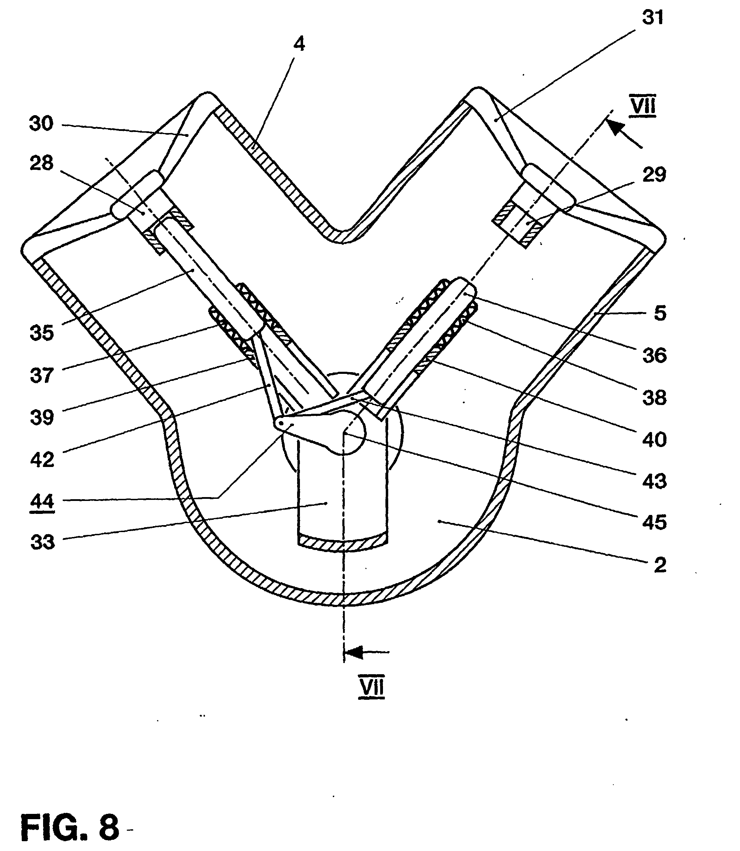

In den Figuren 7 und 8 ist ein gegenüber dem in den Figuren 5 und 6 dargestellten Sammelschienentrenner abgeänderter Sammelschienentrenner 13 dargestellt. Im Unterschied zum Sammelschienentrenner 13 nach den Figuren 5 und 6 weist das bewegliche Kontaktteil 22 dieses Sammelschienentrenners nicht einen drehbaren, kreissektorförmigen Abschnitt 24 aus Kontaktmaterial auf, sondern ein im wesentlichen in Richtung der Achse des rohrförmigen Flanschansatzes 4 verschieblich geführtes Kontaktteil 35 sowie ein im wesentlichen in Richtung der Achse des rohrförmigen Flanschansatzes 5 verschieblich geführtes Kontaktteil 36. Jedes der beiden Kontaktteile 35 bzw. 36 ist in einer auf dem Potential des sammelschienenseitigen Stromanschlusses 26 des Leistungsschalters 12 befindlichen und mindestens einen Gleitkontakt 37 bzw. 38 umschliessenden Metallhülse 39, 40 geführt. Die beiden Metallhülsen 39 und 40 sind mittels eines metallenen Verbindungsteils 41 von L-förmigem Profil derart am sammelschienenseitigen Stromanschluss 26 des Leistungsschalters 12 befestigt, dass sie sich auf dem gleichen Potential wie der Stromanschluss 26 befinden, und dass ihre Hülsenachsen jeweils auf einer der beiden Achsen der Flanschansätze 4 und 5 liegen. An die von den feststehenden Kontakten 28, 29 abgewandten Enden der Kontaktteile 35, 36 ist jeweils eine Koppelstange 42, 43 eines Getriebes 44 angelenkt. Die Koppelstangen 42 und 43 sind mit ihren von den Kontaktteilen 35 bzw. 36 abgewandten Enden an einen Kurbelarm 45 des Getriebes 44 angelenkt, welcher von der ins Metallgehäuse 2 geführten Welle 21 gedreht wird.

Je nach Stellung des Sammelschienentrenners sind die Kontaktteile 35, 36 in die zugeordneten feststehenden Kontakte 28, 29 eingefahren. Die Abmessungen der einzelnen Teile des Getriebes 44 sowie deren Anlenkstellen und Winkelpositionen sind so gewählt, dass beim Drehen der Welle 21 die beim Sammelschienentrenner nach den Figuren 5 und 6 möglichen Stellungen erreicht werden. So wird durch Drehen der Welle 21 im Uhrzeigersinn die aus Fig.8 ersichtliche erste Stellung, in der lediglich die Sammelschiene SS1 mit dem sammelschienenseitigen Anschluss 26 des Leistungsschalters 12 verbunden ist, zunächst in die zweite Stellung, in der beide Sammelschienen miteinander verbunden sind, und danach in die dritte Stellung überführt, in der lediglich die Sammelschiene SS2 mit dem Leistungsschalter 12 verbunden ist.

Ein besonderer Vorteil der Ausbildung der Schaltvorrichtung 1 mit dem Sammelschienentrenner gemäss den Figuren 7 und 8 besteht darin, dass durch das Öffnen und Schliessen der Kontakte in axialer Richtung ein beim Schalten entstehender Lichtbogen axial ausgerichtet ist und nicht zum Auswandern auf die Wand des Metallgehäuses 2 neigt.

Die Schaltvorrichtung 1 nach der Erfindung lässt sich mit Vorteil wie folgt warten und revidieren:

Ist die Schaltvorrichtung für den Einsatz in einer Hochspannungsschaltanlage mit einer einfachen Sammelschiene SS (Schaltvorrichtung gemäss Fig.4) vorgesehen, so sind folgende Verfahrensschritte auszuführen:
(1) Öffnen des Leistungsschalter 12
(2) Freischalten des Verbraucherabgangs (Kabel oder Leitung L) durch Öffnen des Abgangstrenners 18 sowie des Trenners der Gegenstation
(3) Öffnen des Sammelschienentrenners 13
(4) Freischalten der Sammelschiene SS in der Anlage
(5) Betätigung der Erder 14 und 17
(6) Manuelles Erden der freigeschalteten Sammelschiene SS und des freigeschalteten Verbraucherabgangs mittels Erdungsstangen
(7) Kurzschliessen der durch das Metallgehäuse 2 geführten Stromanschlüsse
(8) Lösen der Anschlussverbindungen zur Sammelschiene SS und zum Verbraucherabgang
(9) Ausfahren der Schaltvorrichtung 1.

Ist die Schaltvorrichtung für den Einsatz in einer Hochspannungsschaltanlage mit einer Doppelsammelschiene SS1 und SS2 (Schaltvorrichtung gemäss Fig.3) vorgesehen, so sind folgende Verfahrensschritte auszuführen:
(1) Öffnen des Leistungsschalter 12
(2) Freischalten des Verbraucherabgangs (Kabel oder Leitung L) durch Öffnen eines innerhalb oder ausserhalb des Metallgehäuses 2 vorgesehenen Abgangstrenners sowie des Trenners der Gegenstation
(3) Öffnen des Sammelschienentrenners 13 durch Führen des Abschnitts 24 in die vierte (neutrale) Stellung
(4) Freischalten der Sammelschiene SS1
(5) Betätigung des Erders 14 und eines gegebenenfalls zusätzlich vorgesehenen Erders 17
(6) Manuelles Erden der freigeschalteten Sammelschiene SS1 und des freigeschalteten Verbraucherabgangs mittels Erdungsstangen
(7) Kurzschliessen der durch das Metallgehäuse 2 geführten Stromanschlüsse zur Sammelschiene SS1 und zum Verbraucherabgang
(8) Lösen der Anschlussverbindungen zur Sammelschiene SS1 und zum Verbraucherabgang
(9) Aufheben der Erdung der Sammelschiene SS1, wodurch diese Sammelschiene wieder in Betrieb genommen werden kann und alle Verbraucher von der Sammelschiene SS2 auf die Sammelschiene SS1 geschaltet werden können
(10) Freischalten der Sammelschiene SS2
(11) Manuelles Erden der Sammelschiene SS2 mittels einer Erdungsstange
(12) Kurzschliessen des durch das Metallgehäuse 2 geführten Stromanschlusses zur Sammelschiene SS2
(13) Lösen der Anschlussverbindung zur Sammelschiene SS2
(14) Ausfahren der Schalteinrichtung 1.

### BEZUGSZEICHENLISTE

- 1: Schaltvorrichtung
- 2: Metallgehäuse
- 3, 4, 5: Flanschansätze
- 6, 7, 8: Freiluftdurchführungen
- 9, 10, 11: Antriebe
- 12: Leistungsschalter
- 13: Sammelschienentrenner
- 14: Erder
- 15: Stromsensor
- 16: Spannungssensor
- 17: Erder
- 18: Abgangstrenner
- 19: Spannungssensor
- 20: Stromsensor
- 21: Welle
- 22: beweglicher Kontakt
- 23: Lagerbuchse
- 24: Abschnitt
- 25: Endabschnitt
- 26: Stromanschluss
- 27: Gleitkontakt
- 28, 29: Kontakte
- 30, 31, 32: Stützisolatoren
- 33: Halteteil
- 34: Metalldeckel
- 35, 36: Kontaktteile
- 37, 38: Gleitkontakte
- 39, 40: Metallhülsen
- 41: Verbindungsteil
- 42, 43: Koppelstangen
- 44: Getriebe
- 45: Kurbelarm
- SS, SS1, SS2: Sammelschienen
- L: Leitung

## Patentansprüche

1. Schaltvorrichtung (1) mit
- einem geerdeten, isoliergasgefüllten und überwiegend rohrförmig ausgebildeten Metallgehäuse (2), welches an seiner Mantelfläche zwei jeweils von einem rohrförmigen Flanschansatz (3,4) begrenzte Öffnungen aufweist,
- einem durch eine ersten beider Öffnungen geführten Stromanschluss für eine erste Sammelschiene (SS, SS1),
- einem durcheine zweite beider Öffnungen geführten Stromanschluss für einen Verbraucherabgang (L), und
- im Metallgehäuse angeordnet jeweils mindestens einem Leistungsschalter (12), einem Sammelschienentrennschalter (13) und einem Erder (14),
**dadurch gekennzeichnet,**
- **dass** das Metallgehäuse (2) an seiner Mantelfläche eine von einem rohrförmigen Flanschansatz (5) begrenzte dritte Öffnung aufweist, durch die ein Stromanschluss für eine zweite Sammelschiene (SS2) geführt ist,
- **dass** die Flanschansätze (3, 4, 5) gewinkelt angeordnet sind und an ihren vom Gehäuse abgewandten Enden jeweils eine Freiluftdurchführung (6, 7, 8) halten, und
- **dass** der Sammelschienentrenner (13) als Mehrfach-Stellungstrenner ausgeführt ist und einen ersten (28) und einen zweiten (29) feststehenden Kontakt und eine mit diesen beiden Kontakten (28, 29) zusammenwirkende und mit dem sammelschienenseitigen Stromanschluss (26) des Leistungsschalters (12) elektrisch leitend verbundene bewegliche Kontaktanordnung (22) aufweist,
- wobei der erste feststehende Kontakt (28) das ins Innere des Metallgehäuses (2) geführte Ende des Stromanschlusses der ersten Sammelschiene (SS1) und der zweite feststehende Kontakt (29) das ins Innere des Metallgehäuses (2) geführte Ende des Stromanschlusses der zweiten Sammelschiene (SS2) bildet, und
- wobei die bewegliche Kontaktanordnung (22) derart ausgebildet und geführt ist, dass sie in einer ersten Stellung des Sammelschienentrenners (13) den ersten feststehenden Kontakt (28), in einer zweiten Stellung den ersten (28) und zweiten feststehenden Kontakt (29) gemeinsam und in einer dritten Stellung den zweiten feststehenden Kontakt (29) kontaktiert.

2. Schaltvorrichtung nach Anspruch 1, **dadurch gekennzeichnet, dass** anstelle der Freiluftdurchführung (8) für die zweite Sammelschiene (SS1) der diese Durchführung haltende Flanschansatz (5) einen auf Gehäusepotential befindlichen Metalldeckel (34) trägt, auf dessen ins Gehäuseinnere gerichteter Seite der nun als Erdungskontakt wirkende, feststehende Kontakt (29) des Sammelschienentrenners (13) befestigt ist.

3. Schaltvorrichtung nach Anspruch 1 oder 2, **dadurch gekennzeichnet, dass** die Freiluftdurchführungen (6, 7, 8) ein faserverstärktes Kunstharzgehäuse mit einer Silikonbeschirmung aufweisen.

4. Schaltvorrichtung nach einem der Ansprüche 1 bis 3, **dadurch gekennzeichnet, dass** die bewegliche Kontaktanordnung (22) in einer vierten Stellung des Sammelschienentrenners (13) weder den ersten (28) noch den zweiten (29) feststehenden Kontakt kontaktiert.

5. Schaltvorrichtung nach Anspruch 4, **dadurch gekennzeichnet, dass** die bewegliche Kontaktanordnung (22) in der vierten Stellung einer geerdeten Stromleiter kontaktiert.

6. Schaltvorrichtung nach einem der Ansprüche 1 bis 5, **dadurch gekennzeichnet, dass** die bewegliche Kontaktanordnung (22) drehbar gelagert ist und über einen Gleitkontakt (27) mit dem sammelschienenseitigen Stromanschluss (26) des Leistungsschalters (12) elektrisch leitend verbunden ist.

7. Schaltvorrichtung nach Anspruch 6, **dadurch gekennzeichnet, dass** die bewegliche Kontaktanordnung (22) einen kreissektorförmigen Abschnitt (24) aufweist, welcher in der ersten, zweiten und dritten Stellung des Sammelschienentrenners (13) mit den zugeordneten feststehenden Kontakten (28, 29) zusammenwirkt.

8. Schaltvorrichtung nach einem der Ansprüche 6 oder 7, **dadurch gekennzeichnet, dass** die bewegliche Kontaktanordnung (22) an dem im Gehäuseinneren befindlichen Ende einer gasdicht aus dem Metallgehäuse (2) geführten Welle befestigt (21) und im Bereich des Gleitkontakts (27) am sammelschienenseitigen Stromanschluss (26) des Leistungsschalters (12) gelagert ist.

9. Schaltvorrichtung nach einem der Ansprüche 1 bis 5, **dadurch gekennzeichnet, dass** die bewegliche Kontaktanordnung (22) ein verschieblich geführtes und in der ersten und zweiten Stellung den ersten feststehenden Kontakt (28) kontaktierendes erstes Kontaktteil (35) sowie ein verschieblich geführtes und in der zweiten und dritten Stellung den zweiten feststehenden Kontakt (29) kontaktierendes zweites Kontaktteil (36) aufweist.

10. Schaltvorrichtung nach Anspruch 9, **dadurch gekennzeichnet, dass** mindestens eines der beiden Kontaktteile (35, 36) in einer auf dem Potential des sammelschienenseitigen Stromanschlusses (26) des Leistungsschalters (12) befindlichen und mindestens einen Gleitkontakt (37, 38) umschliessenden Metallhülse (39, 40) geführt ist.

11. Schaltvorrichtung nach Anspruch 10, **dadurch gekennzeichnet, dass** an das vom feststehenden Kontakt (28, 29) abgewandte Ende des mindestens einen Kontaktteils (35, 36) eine Koppelstange (42, 43) angelenkt ist, die ihrerseits an einen Kurbelarm (45) einer von einer Welle (21) betätigten Kurbel angelenkt ist.

12. Schaltvorrichtung nach einem der Ansprüche 8 oder 11, **dadurch gekennzeichnet, dass** der sammelschienenseitige Stromanschluss (26) des Leistungsschalters (12) auf einem am Metallgehäuse (2) gehaltenen Isolator (32) abgestützt ist.

13. Schaltvorrichtung nach Anspruch 12, **dadurch gekennzeichnet, dass** der Stützisolator (32) die Welle (31) konzentrisch umgibt und an seinem von Metallgehäuse (2) abgewandten Ende ein die bewegliche Kontaktanordnung (22) hintergreifendes und der Befestigung des sammelschienenseitigen Stromanschlusses (26) des Leistungsschalters (12) dienendes Halteteil (33) aufweist.

14. Schaltvorrichtung nach einem der Ansprüche 1 bis 13, **dadurch gekennzeichnet, dass** im Metallgehäuse (2) zusätzlich mindestens ein kapazitiv oder optisch wirkender Spannungssensor und/oder ein als Rogowskispule ausgebildeter oder optisch wirkender Stromsensor (15, 16, 19, 20) und/oder mindestens ein beide sensoren kombinierender Strom- und Spannungssensor angeordnet sind.

15. Schaltvorrichtung nach Anspruch 14, **dadurch gekennzeichnet, dass** der mindestens eine spannungssensor am abgangsseitigen Stromanschluss des Leistungsschalters (12) angeordnet ist, und dass zusätzlich ein am sammelschienenseitigen Stromanschluss des Leistungsschalters (12) angeordneter Spannungssensor vorgesehen ist.

## Revendications

1. Dispositif de commutation (1) comprenant
- un carter métallique (2) rempli de gaz isolant, mis à la terre et réalisé avec une forme essentiellement tubulaire, qui présente sur sa surface d'enveloppe deux ouvertures limitées à chaque fois par un élément de bride de forme tubulaire (3, 4),
- une connexion de courant guidée à travers une première de deux ouvertures pour une première barre omnibus (SS, SS1),
- une connexion de courant guidée à travers une deuxième de deux ouvertures pour une sortie consommateur (L), et
- à chaque fois au moins un commutateur de puissance (12), un sectionneur de barre omnibus (13) et un commutateur de mise à la terre (14) disposés dans le carter métallique,
**caractérisé en ce que**
- le carter métallique (2) présente, sur sa face d'enveloppe, une troisième ouverture limitée par un élément de bride de forme tubulaire (5), à travers laquelle une connexion de courant pour une deuxième barre omnibus (SS2) est guidée,
- les éléments de bride (3, 4, 5) sont disposés suivant un certain angle et retiennent, au niveau de leurs extrémités opposées au carter, à chaque fois une traversée extérieure (6, 7, 8), et
- le sectionneur de barre omnibus (13) est réalisé en tant que sectionneur à positions multiples et présente un premier contact fixe (28) et un deuxième contact fixe (29) et un agencement de contact mobile (22) coopérant avec ces deux contacts (28, 29) et connecté de manière électriquement conductrice à la connexion de courant (26), côté barre omnibus, du commutateur de puissance (12),
- le premier contact fixe (28) formant l'extrémité, guidée à l'intérieur du carter métallique (2), de la connexion de courant de la première barre omnibus (SS1) et le deuxième contact fixe (29) formant l'extrémité, guidée à l'intérieur du carter métallique (2), de la connexion de courant de la deuxième barre omnibus (SS2), et
- l'agencement de contact mobile (22) étant réalisé et guidé de telle sorte qu'il vienne en contact, dans une première position du sectionneur de barre omnibus (13), avec le premier contact fixe (28), dans une deuxième position, avec le premier (28) et le deuxième (29) contacts fixes conjointement et dans une troisième position, avec le deuxième contact fixe (29).

2. Dispositif de commutation selon la revendication 1, **caractérisé en ce qu'**au lieu de la traversée extérieure (8) pour la deuxième barre omnibus (SS2) l'élément de bride (5) retenant cette traversée porte un couvercle métallique (34) se trouvant au potentiel du carter, sur le côté orienté vers l'intérieur du carter duquel est fixé le contact fixe (29), agissant en tant que contact de mise à la terre, du sectionneur de barre omnibus (13).

3. Dispositif de commutation selon la revendication 1 ou 2, **caractérisé en ce que** les traversées extérieures (6, 7, 8) présentent un carter en résine synthétique renforcé par des fibres avec un blindage de silicone.

4. Dispositif de commutation selon l'une quelconque des revendications 1 à 3, **caractérisé en ce que** l'agencement de contact mobile (22) ne vient en contact, dans une quatrième position du sectionneur de barre omnibus (13), ni avec le premier contact fixe (28) ni avec le deuxième contact fixe (29).

5. Dispositif de commutation selon la revendication 4, **caractérisé en ce que** l'agencement de contact mobile (22) vient en contact, dans la quatrième position, avec un conducteur de courant mis à la terre.

6. Dispositif de commutation selon l'une quelconque des revendications 1 à 5, **caractérisé en ce que** l'agencement de contact mobile (22) est monté rotatif et est connecté de manière électriquement conductrice par le biais d'un contact coulissant (27) à la connexion de courant (26), côté barre omnibus, du commutateur de puissance (12).

7. Dispositif de commutation selon la revendication 6, **caractérisé en ce que** l'agencement de contact mobile (22) présente une portion (24) en forme de secteur de cercle qui coopère, dans la première, deuxième et troisième position du sectionneur de barre omnibus (13) avec les contacts fixes associés (28, 29).

8. Dispositif de commutation selon l'une quelconque des revendications 4 ou 7, **caractérisé en ce que** l'agencement de contact mobile (22) est fixé à l'extrémité d'une tige (21) guidée de manière étanche aux gaz hors du carter métallique (2), se trouvant à l'intérieur du carter et est monté dans la région du contact coulissant (27) sur la connexion de courant (26), côté barre omnibus, du commutateur de puissance (12).

9. Dispositif de commutation selon l'une quelconque des revendications 1 à 5, **caractérisé en ce que** l'agencement de contact mobile (22) présente une première partie de contact (35) guidée de manière déplaçable et venant en contact dans les première et deuxième positions avec le premier contact fixe (28) ainsi qu'une deuxième partie de contact (36) guidée de manière déplaçable et venant en contact, dans les deuxième et troisième positions, avec le deuxième contact fixe (29).

10. Dispositif de commutation selon la revendication 9, **caractérisé en ce qu'**au moins une des deux parties de contact (35, 36) est guidée dans un manchon métallique (39, 40) se trouvant au potentiel de la connexion de courant (26), côté barre omnibus, du commutateur de puissance (12) et entourant au moins un contact coulissant (37, 38).

11. Dispositif de commutation selon la revendication 10, **caractérisé en ce qu'**à l'extrémité de l'au moins une partie de contact (35, 36), opposée au contact fixe (28, 29), est articulée une barre de liaison (42, 43) qui est à son tour articulée à un bras de manivelle (45) d'une manivelle actionnée par une tige (21).

12. Dispositif de commutation selon l'une quelconque des revendications 8 ou 11, **caractérisé en ce que** la connexion de courant (26), côté barre omnibus, du commutateur de puissance (12) est supportée sur un isolateur (32) maintenu sur le carter métallique (2).

13. Dispositif de commutation selon la revendication 12, **caractérisé en ce que** l'isolateur de support (32) entoure concentriquement la tige (21) et présente à son extrémité opposée au carter métallique (2) une partie de fixation (33) venant en prise par l'arrière avec l'agencement de contact mobile (22) et servant à la fixation de la connexion de courant (26), côté barre omnibus, du commutateur de puissance (12).

14. Dispositif de commutation selon l'une quelconque des revendications 1 à 13, **caractérisé en ce qu'**au moins un détecteur de tension agissant de manière capacitive ou optique et/ou un détecteur de courant réalisé sous forme de bobine de Rogowski ou agissant de manière optique (15, 16, 19, 20) et/ou au moins un détecteur de courant et de tension combinant les deux détecteurs, sont disposés en outre dans le carter métallique (2).

15. Dispositif de commutation selon la revendication 14, **caractérisé en ce que** l'au moins un détecteur de tension est disposé sur la connexion de courant, côté sortie, du commutateur de puissance (12), et **en ce qu'**il est prévu en outre un détecteur de tension disposé sur la connexion de courant, côté barre omnibus, du commutateur de puissance (12).

## Claims

1. Switching apparatus (1) having
- an earthed metal enclosure (2) which is filled with insulating gas, is predominantly tubular and, on its casing surface, has two openings which are each bounded by a tubular flange attachment (3, 4),
- an electrical connection, which is passed through a first of the two openings, for a first busbar (SS, SS1),
- an electrical connection, which is passed through a second of the two openings, for a load outgoer (L), and
- in each case at least one circuit breaker (12), one busbar isolating switch (13) and one earthing device (14) arranged in the metal enclosure,
**characterized**
- **in that** the metal enclosure (2) has, on its casing surface, a third opening which is bounded by a tubular flange attachment (5) through which an electrical connection for a second busbar (SS2) is passed,
- **in that** the flange attachments (3, 4, 5) are arranged at an angle and each hold an outdoor bushing (6, 7, 8) at their ends facing away from the enclosure, and
- **in that** the busbar disconnector (13) is in the form of a multiple position disconnector and has a first (28) and a second (29) stationary contact, and a moving contact arrangement (22), which interacts with these two contacts (28, 29) and is electrically conductively connected to the busbar-side electrical connection (26) of the circuit breaker (12),
- with the first stationary contact (28) forming that end of the electrical connection of the first busbar (SS1) which is passed into the interior of the metal enclosure (2), and that the second stationary contact (29) forming that end of the electrical connection of the second busbar (SS2) which is passed into the interior of the metal enclosure (2), and
- with the moving contact arrangement (22) being designed and guided such that the moving contact arrangement (22) makes contact with the first stationary contact (28) when the busbar disconnector (13) is in a first position, makes contact jointly with the first (28) and with the second stationary contact (29) in the second position, and makes contact with the second stationary contact (29) in a third position.

2. Switching apparatus according to Claim 2, **characterized in that**, instead of the outdoor bushing (8) for the second busbar (SS1), the flange attachment (5) which holds this bushing is fitted with a metal cover (34) which is at the enclosure potential and on whose side pointing into the enclosure interior the stationary contact (29), which now acts as an earthing contact, of the busbar disconnector (13) is mounted.

3. Switching apparatus according to Claim 1 or 2, **characterized in that** the outdoor bushing (6, 7, 8) have a fibre-reinforced plastic enclosure with a silicon screen.

4. Switching apparatus according to one of Claims 1 to 3, **characterized in that** the moving contact arrangement (22) does not make contact with either the first (28) or the second (29) stationary contact when the busbar disconnector (13) is in a fourth position.

5. Switching apparatus according to Claim 4, **characterized in that** the moving contact arrangement (22) makes contact with an earthed electrical conductor in the fourth position.

6. Switching apparatus according to one of Claims 1 to 5, **characterized in that** the moving contact arrangement (22) is mounted such that it can rotate, and is electrically conductively connected via a sliding contact (27) to the busbar-side electrical connection (26) of the circuit breaker (12).

7. Switching apparatus according to Claim 6, **characterized in that** the moving contact arrangement (22) has a section (24) which is in the form of a circle sector, and interacts with the associated stationary contacts (28, 29) when the busbar disconnector (13) is in the first, second and third positions.

8. Switching apparatus according to one of Claims 6, or 7, **characterized in that** the moving contact arrangement (22) is mounted (21) at the end located in the enclosure interior of a shaft which is passed out of the metal enclosure (2) in a gas-tight manner, and is mounted on the busbar-side electrical connection (26) of the circuit breaker (12), in the area of the sliding contact (27).

9. Switching apparatus according to one of Claims 1 to 5, **characterized in that** the moving contact arrangement (22) has a first contact part (35), which is guided such that it can move and makes contact with the first stationary contact (28) in the first and second positions, as well as a second contact part (36), which is guided such that it can move and makes contact with the second stationary contact (29) in the second and third positions.

10. Switching apparatus according to Claim 9, **characterized in that** at least one of the two contact parts (35, 36) is guided in a metal sleeve (39, 40), which is at the same potential as the busbar-side electrical connection (26) of the circuit breaker (12) and surrounds at least one sliding contact (37, 38).

11. Switching apparatus according to Claim 10, **characterized in that** a coupling rod (42, 43) is hinged at that end of the at least one contact part (35, 36) which faces away from the stationary contact (28, 29), and is itself hinged on a crank arm (45) of a crank which is operated by the shaft (21).

12. Switching apparatus according to one of Claims 8 or 11, **characterized in that** the busbar-side electrical connection (26) of the circuit breaker (12) is supported on an insulator (32), which is held on the metal enclosure (2).

13. Switching apparatus according to Claim 12, **characterized in that** the post insulator (32) concentrically surrounds the shaft (31) and, at its end facing away from the metal enclosure (2), has a holding part (33) which engages behind the moving contact arrangement (22) and is used for attachment of the busbar-side electrical connection (26) of the circuit breaker (12).

14. Switching apparatus according to one of Claims 1 to 13, **characterized in that** at least one capacatively acting or optically acting voltage sensor and/or one current sensor (15, 16, 19, 20), which is in the form of a transposed conductor coil or is optically acting, and/or at least one current and voltage sensor which combines both sensors are/is additionally arranged in the metal enclosure (2).

15. Switching apparatus according to Claim 14, **characterized in that** the at least one voltage sensor is arranged on the outgoer-side electrical connection of the circuit breaker (12) and **in that** a voltage sensor is additionally provided, and is arranged on the busbar-side electrical connection of the circuit breaker (12).
